# EUROPEAN PATENT SPECIFICATION

(11) **EP 4 317 946 B1**
(45) Date of publication and mention of the grant of the patent: **08.04.2026**
(21) Application number: 21943478.4
(22) Date of filing: 01.06.2021
(51) Int. Cl.: G01N 21/64, G01N 1/34, G01N 1/30

(54) **USE OF METHYLENE BLUE AND FLUORESCEIN SODIUM DOUBLE-STAINING IN LIVE CELL IMAGING**
VERWENDUNG VON METHYLENBLAU UND FLUORESCEIN-NATRIUM-DOPPELFÄRBUNG IN DER LEBENDZELLENBILDGEBUNG
UTILISATION DE DOUBLE COLORATION À LA FLUORESCÉINE SODIQUE ET AU BLEU DE MÉTHYLÈNE DANS L'IMAGERIE DE CELLULES VIVANTES

(43) Date of publication of application: 07.02.2024
(73) Proprietor: Zhang, Huimin, Shanghai 200436 (CN)
(72) Inventor: Zhang, Huimin, Shanghai 200436 (CN)
(74) Representative: Winter, Brandl - Partnerschaft mbB
(86) International application number: PCT/CN2021/097584
(87) International publication number: WO 2022/252103

(56) References cited:
- WO-A1-00/06774
- CN-A- 103 874 913
- CN-A- 113 348 356
- ES-A1- 2 326 061
- RU-C1- 2 098 089
- US-A1- 2011 015 529
- US-A1- 2016 060 678
- LUGGER JODY A. M. ET AL: "Homeotropic Self-Alignment of Discotic Liquid Crystals for Nanoporous Polymer Films", ACS NANO, vol. 12, no. 7, 24 July 2018 (2018-07-24), US, pages 6714 - 6724, XP055912181, ISSN: 1936-0851, DOI: 10.1021/acsnano.8b01822
- RODRIGUES E B ET AL: "The Use of Vital Dyes in Ocular Surgery", SURVEY OF OPHTHALMOLOGY, SURVEY OF OPHTHALMOLOGY INC, XX, vol. 54, no. 5, 1 September 2009 (2009-09-01), pages 576 - 617, XP026458320, ISSN: 0039-6257, [retrieved on 20090812]

## Description

### TECHNICAL FIELD

The present invention relates to a method of double-staining by fluorescent biological markers, belonging to the field of biotechnology.

### BACKGROUND

Fluorescence staining in combination with fluorescence microscopy has made fluorescence imaging widely used in the detection of bioactive substances and cell imaging. Cell imaging is important research means in the field of life science technology. Fluorescent staining has advantages such as high sensitivity, high selectivity, simple operation, sensitive reaction etc., as compared with other technologies, and is currently a highly sensitive visual analysis technology widely used in living cell analysis.

Fluorescence is a cold luminescence phenomenon of "photoluminescence". A substance at room temperature, when irradiated by incident light with a specific wavelength, absorbs light energy and enters an excited state, immediately emitting an emergent light having a wavelength longer than that of the incident light, which is called fluorescence.

There are two types of fluorescence spectrum, including excitation spectrum and emission spectrum. The excitation spectrum refers to the relationship between the intensity or luminescent efficiency of a luminescent spectral line and band of a fluorescent substance and the wavelength of the excitation light under the excitation of the substance by light with different wavelengths. The emission spectrum refers to the varied luminous intensity of the excitation light having different wavelengths of the fluorescent substance under the excitation by an excitation light. Every fluorescent substance has excitation and emission spectra, as well as its most suitable excitation and emission bands. Current studies on fluorescence mainly focus on the excitation and emission spectra of fluorescent substances, such as 5-aminolevulinic acid (5-ALA), which is widely used in clinics, in order to find their most suitable excitation and emission bands.

Fluorescence detection of malignant lesions based on 5-ALA is currently used in brain surgery, urology surgery, and gastrointestinal surgery. 5-ALA-induced protoporphyrin IX (PPIX) fluorescence detection has recently become a promising method for detecting malignant lesions during operation. In order to improve the accuracy of 5-ALA fluorescence detection under strong spontaneous fluorescence conditions, several spectral analysis methods have been developed (Valdes, P.A. et al. (2011) Neurosurg.115, 11-17; Xu, H.& Rice, B.W. (2009) Journal of biomedical optics 14, 064011; Harada, K. et al. (2013) International Journal of Molecular Sciences 14, 23140-23152; Koizumi, N. et al. (2013) Ann. Surg.Oncol.20, 3541-3548; Kondo, Y. et al. (2014) Int.J.Oncol.45, 41-46). Although some studies have reported the effectiveness of 5-ALA fluorescence detection methods in clinical applications, detection errors often occur due to the strong fluorescent background of chromophores themselves.

Some fluorescent biomarkers have been studied. In addition to the aforementioned 5-ALA, sodium fluorescein (FS) and indocyanine green (ICG) are currently widely used.

Sodium fluorescein is a fluorescent dye for living bodies, and its aqueous solution can label cell body contours, and are used to improve the visualization of tumor tissue. Fluorescein has no specificity for tumor cells. This dye, when excited by light with a wavelength ranging from 460 to 500 nm, emits fluorescent radiation with a wavelength ranging from 540 to 690 nm, rendering wide applications in medicine, especially in brain tumor surgery (Copeman SM, Coke F, Gouldesbrough C., Br Med J. (1929) 2:233-42; Hamamcioglu MK. et al., Clin Neurol Neurosurg (2016) 143:39-45; O'goshi K, Serup J.,Ski Res Technol. (2006) 12:155-61; Koc K. et al., Br JNeurosurg (2008) 22:99-103; Hara T. et al., Am J Ophthalmol. (1998) 126:560-4; Kuroiwa T. et al., Surg Neurol (1998) 50:41-8).

Indoline Green (ICG) is an amphipathic small molecule (< 800 Daltons) that is a near-infrared (NIR) fluorophore (peak excitation=805 nm, peak emission=835 nm). Indoline Green usually remains in blood vessels when injected intravenously, and mainly binds to albumin and other plasma proteins, which enables near-infrared imaging to depict the vascular system. In recent years, It is found from the study of tumor tissues in rats and human patients, ICG is accumulated in tumors with a striking contrast between tumor and background. ICG has been proven to be useful in labeling tumor tissue (Cho SS. et al., (2019) Front.Surg.6:11; Hansen DA et al., Surg Neurol. (1993) 40:451-6; Haglund MM. et al., Neurosurgery.(1994) 35:930-40; Haglund MM., et al., Neurosurgery.(1996) 38:308-17; Madajewski B., et al., Clin Cancer Res. (2012) 18:5741-51; 30.Jiang JX., et al., Am J Nucl Med Mol Imaging.(2015) 5:390-400; Zeh R. et al., PLoS ONE. (2017) 12: e0182034).

Methylene blue (MB), also known as Basic Blue 9, is a nontoxic alternative dye approved by the US Food and Drug Administration for the treatment of methemoglobinemia. Meilan is another near-infrared fluorophore that is currently available in human clinical trials in addition to ICG. It has peak emission at 700 nm and emits fluorescence in different near-infrared bands compared to sodium fluorescein and ICG.

Although the current research and application of fluorescent dyes are very extensive, there are still shortcomings in the staining effects of these fluorescent dyes. For example, sodium fluorescein and ICG do not have specificity. 5ALA has higher specificity than that of sodium fluorescein, but poor sensitivity and contrast with the surrounding normal tissue (Okuda T. et al., J Clin Neurosci. (2012) 19:1719-22; Acerbi F. et al., Neurosurg.Focus. (2014) 36:E5; Okuda T. et al., J Clin Neurosci. (2010) 17:118-121; 35. Chen B. et al., Int J Med Sci. (2012) 9:708-714; Francaviglia N. et al., Surg Neurol Int. (2017) 8:145; Bowden SG. et al., Neurosurgery. (2018) 82:719-27). Some studies have attempted dual injections of 5-ALA and fluorescein to enhance the detection of tumor tissue by increasing the comparison between tumor tissue uptaking 5-ALA and the peritumoral area uptaking fluorescein (SueroMolinaE. et al., JNeurosurg. (2018) 128:399-405), with improved results, but still insufficient to meet clinical needs.

Eduardo B. Rodrigues et al. describes the use of vital dyes in ocular surgery (Rodrigues et al., SURVEY OF OPHTHALMOLOGY, (2009) 54: 576-617).

The wide applications of fluorescent dyes in clinical practice are described above, showing the cases in which fluorescence imaging is formed to facilitate the observation of overall tissues through the absorption and conversion of the dyes by cell masses, combined with the cold luminescence phenomenon of "photoluminescence" of fluorescence. However, when observing living cells by fluorescence microscopy, these dyes, when absorbed by a single cell, can only be absorbed by the cell body or the cell nucleus. Thus, when living cells are fluorescence stained and observed under a fluorescence microscope, acridine yellow staining imaging can show cell nucleus morphology, but not cell morphology, and sodium fluorescein staining imaging can show cell morphology, but not cell nucleus morphology. Only the morphology of the nucleus or cell can be observed microscopically, which does not meet the need to observe the morphology of the nucleus or cell both during cell observation.

To sum up, the common fluorescence staining methods currently used for living cell imaging analysis have drawbacks in practical applications, such as the requirement of fixing cells, cumbersome operation, long staining time, no specificity, insufficient contrast, and inability to clearly observe both cell and nuclear morphology. Therefore, improving the selectivity and accuracy of visual analysis is an urgent issue that needs to be addressed.

### SUMMARY

A main object of the present invention is to provide a novel staining method that utilizes fluorescent biomarkers to double-stain living cells to overcome the shortcomings in the related art.

To achieve the aforementioned objective, the present invention provides the following technical solution.

The present invention provides a method for staining living cells, including:
simultaneously or separately, (i) staining target cells with a first fluorescent biomarker; (ii) staining said target cells with a second fluorescent biomarker; and (iii) obtaining a fluorescence image of said target cell under a fluorescence microscope. The method allows observing the morphology of the cells while observing the morphology of cell nucleus.

The method of the present invention is defined in claim 1.

According to the invention, the first fluorescent biomarker sodium fluorescein.

According to the invention, the second fluorescent biomarker is methylene blue.

Preferably, the sodium fluorescein has a concentration of 0.1% to 1%, and the methylene blue has a concentration of 0.5% to 3%.

More preferably, the sodium fluorescein has a concentration of 0.25%, and the methylene blue has a concentration of 1%.

Preferably, the method is for staining living tissues.

Preferably, the living cells referred to in the present disclosure include cancer cells.

More preferably, the first fluorescent biomarker and the second fluorescent biomarker are administrated to an affected area before performing surgical procedures.

More preferably, the surgical procedures are cancer surgical procedures.

In another embodiment, the present invention also provides a use of a composition for staining living cells for imaging, comprising a first fluorescent biomarker and a second fluorescent biomarker as fluorescent biomarkers to double-stain living cells.

The first fluorescent biomarker is sodium fluorescein, and the second fluorescent biomarker is methylene blue.

Moreover, the sodium fluorescein has a concentration of 0.1% to 1%, and the methylene blue has a concentration of 0.5% to 3%.

Preferably, the sodium fluorescein has a concentration of 0.25%, and the methylene blue has a concentration of 1%.

Preferably, the composition also includes stabilizers, antioxidants, protectants, preservatives, and pH regulators.

The composition of the present invention can also be formulated with one or more physiologically acceptable carriers including excipients and auxiliaries that facilitate the processing of the active agent into a pharmaceutically acceptable formulation. The suitable formulation depends on the route of administration selected.

The stabilizer can be one or more selected from the group consisting of sorbitol ester, polyoxyethylene hydrogenated castor oil, and polyvinyl alcohol.

The antioxidant can be one or more selected from the group consisting of sodium sulfite, potassium sulfite, sodium sulfate, potassium sulfate, citric acid, dibutyl hydroxytoluene, tert-butyl hydroquinone, and citric acid.

The protective agent can be one or more selected from the group consisting of hydroxypropyl methylcellulose, sodium hyaluronate for medical use, polyacrylamide, carbomer, xylitol, glucose, and alkyl glucoside.

The pH regulator can be one or more selected from the group consisting of sodium dihydrogen phosphate, disodium hydrogen phosphate, potassium dihydrogen phosphate, dipotassium hydrogen phosphate, boric acid, borax, acetic acid, sodium acetate, citric acid, sodium citrate, tartaric acid, sodium tartrate, sodium carbonate, potassium carbonate, sodium bicarbonate, sodium hydroxide, potassium hydroxide, triethanolamine, hydrochloric acid, and phosphoric acid.

The preservative can be one or more selected from the group consisting of benzalkonium chloride, benzalkonium bromide, chlorobutanol, and sorbitol.

The aforementioned composition of the present disclosure may have other alternative names during actual sales, such as reagent kits, kits, sets, or systems. Two substances in the aforementioned composition can be mixed and packaged together, or packaged separately.

In the present disclosure, it is found that the method of sodium fluorescein and methylene blue double-staining can significantly improve the imaging effect. Sodium fluorescein, which improves the contrast against the background, and methylene blue, which well labels the cell nucleus, make it possible to observe the morphology of the cells while clearly observing the cell nucleus, especially get important information, such as changes in the nucleus-to-cytoplasm ratio of tumor cells, so as to clearly distinguish normal tissues from tumor tissues and visualize the boundary between tumor and non-tumor tissues, thereby meeting the clinical needs. In addition, both dyes have been approved for clinical use currently, ensuring their safety.

Further, the fluorescent biomarker may also be dyes selected from the group consisting of fluorescein isothiocyanate (FITC), phycoerythrin, phycocyanin, allophycocyanin, ophthaldehyde, rhodamine, and AlexaFluor series dyes, DAPI, Hoechst33342 thiazole orange, acridine orange, and the like.

In practical application, the staining method of the present disclosure can be applied not only to pathological tissue sections, but also to staining of living tissues and in vitro cultured cells. Cells of the tissue to be imaged, cells on microcarriers, or cells on smears can be directly contacted and stained with the dye of the present disclosure. So it can be further applied for clinical use such as surgical procedures, diagnosis, drug delivery, and the like.

Compared with the related art, the present disclosure has the following advantages.

The present disclosure provides a method of double-staining by fluorescent biomarkers for live cell imaging, which has advantages of rapidness, high efficiency, safety, and so on. It allows for observing the morphology of the cells while observing the morphology of the cell nucleus and for distinguishing normal cells from tumor cells clearly. It is of great significance to the development of the fields such as tissue staining, cell morphology research, image-guided surgery, and the like.

### BRIEF DESCRIPTION OF THE ACCOMPANY DRAWINGS

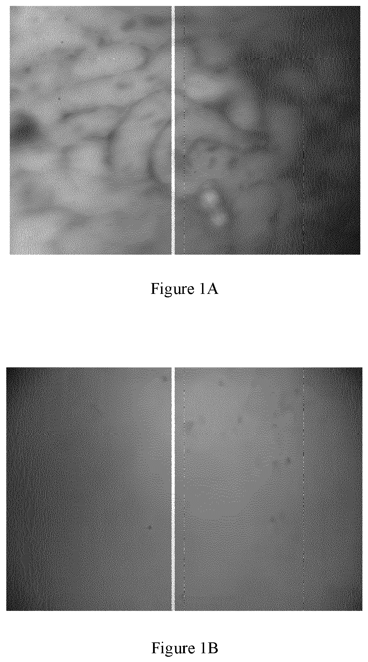

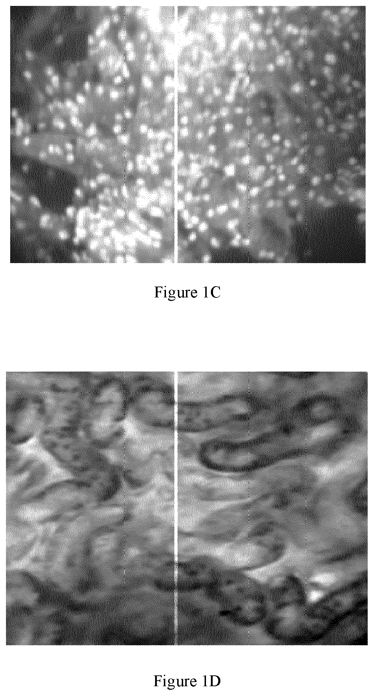

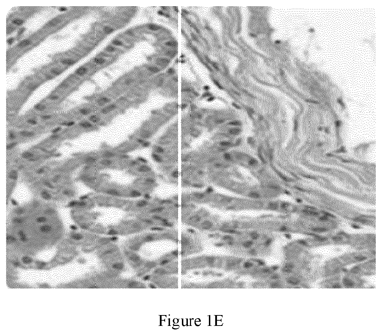

Figure 1: Comparison of the imaging effects of methylene blue alone, sodium fluorescein alone, and methylene blue-sodium fluorescein double staining in mouse kidneys. Figure 1A shows the imaging results of staining with sodium fluorescein alone at a wavelength of 470 nm. Figure 1B shows the imaging results of staining with methylene blue alone at a wavelength of 470 nm. Figure 1C shows the imaging results of staining with methylene blue alone at a wavelength of 660 nm. Figure 1D shows the imaging results of double-staining with sodium fluorescein and methylene blue at a wavelength of 470 nm. Figure 1E shows the HE staining control.

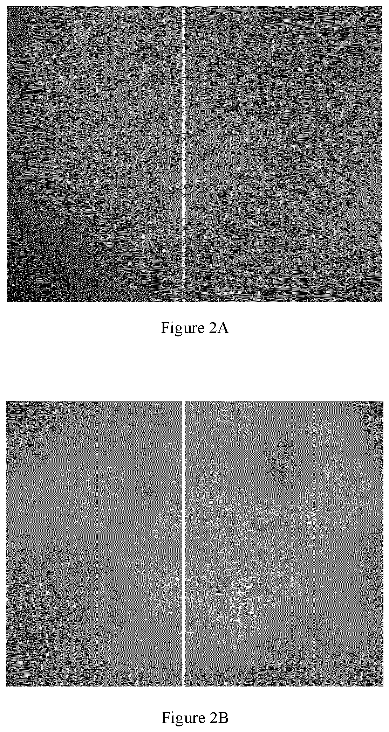

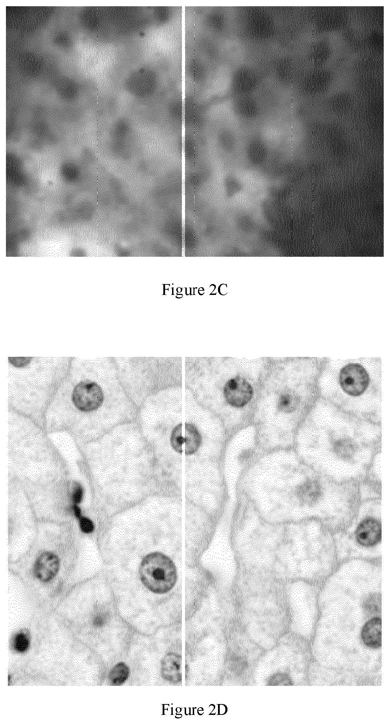

Figure 2: Comparison of the imaging effects of methylene blue alone, sodium fluorescein alone, and methylene blue-sodium fluorescein double staining in mouse livers. Figure 2A shows the imaging results of staining with sodium fluorescein alone at a wavelength of 470 nm. Figure 2B shows the imaging results of staining with methylene blue alone at a wavelength of 470 nm. Figure 2C shows the imaging results of double-staining with sodium fluorescein and methylene blue at a wavelength of 470 nm. Figure 2D shows the HE staining control.

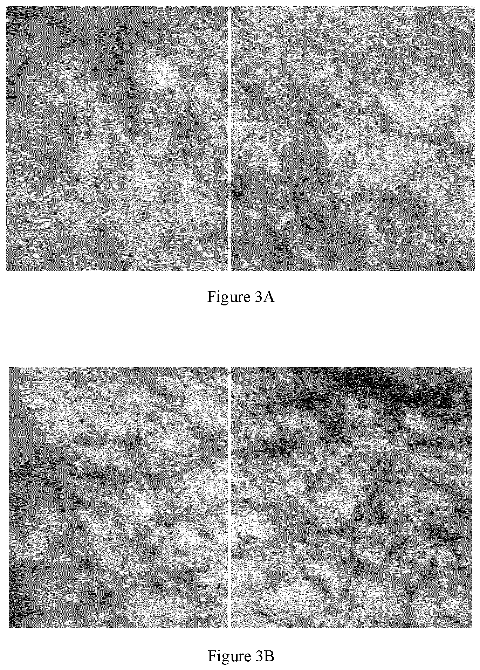

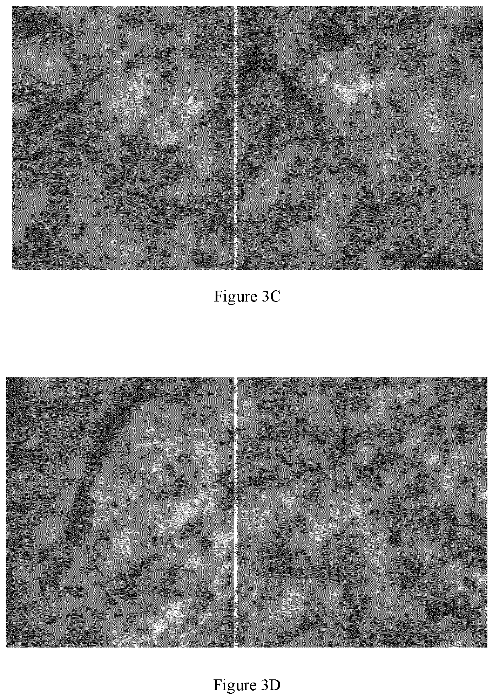

Figure 3: Comparison of the imaging effects of double-staining with methylene blue and sodium fluorescein at different concentrations in pig kidneys. Figure 3A shows the imaging results of staining with 0.1% sodium fluorescein in combination with 0.5% methylene blue at a wavelength of 470 nm. Figure 3B shows the imaging results of staining with 0.25% sodium fluorescein in combination with 1% methylene blue at a wavelength of 470 nm. Figure 3C shows the imaging results of staining with 0.5% sodium fluorescein in combination with 2% methylene blue at a wavelength of 470 nm. Figure 3D shows the imaging results of staining with 1% sodium fluorescein in combination with 3% methylene blue at a wavelength of 470 nm.

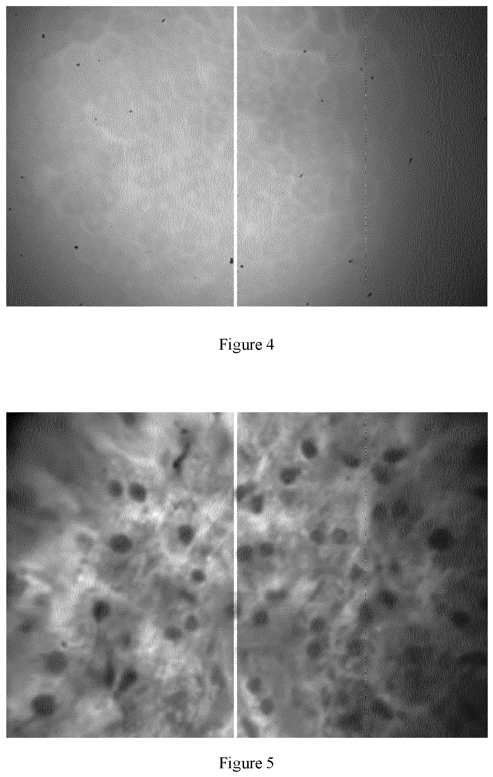

Figure 4: Imaging results of double-staining with 5-ALA and acridine yellow in pig livers.
Figure 5: Imaging results of double-staining with methylene blue and ICG in pig livers.

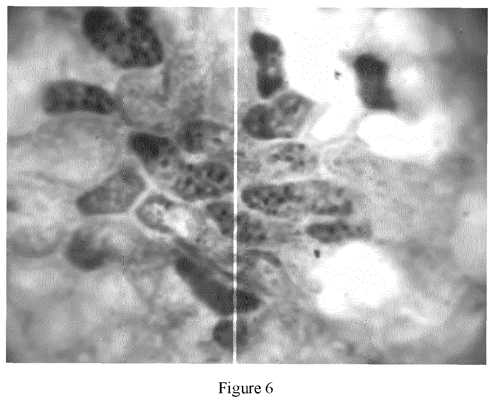

Figure 6: Imaging results of double-staining with sodium fluorescein and crystal violet in pig kidneys.

### DETAILED DESCRIPTION

The present disclosure is further described in conjunction with the accompanying drawings and specific embodiments and is not limited to the following embodiments.

### Mice

Mice are C57BL6 strains purchased from Animal Center, Nanjing University.

### Fluorescence image analysis

Fluorescence images were obtained under MCI microscope (DiveScope). The samples were stained and observed at a wavelength of 470 nm, and regions of interest were randomly selected for imaging.

### Preparation of Staining Solution

0.1% sodium fluorescein: 0.01 g of sodium fluorescein powder was weighed and added into a light-proof tube, followed by adding 10 mL of normal saline. The tube was shaken well, wrapped with tin foil, and stored in the dark.

0.25% sodium fluorescein: 0.025 g of sodium fluorescein powder was weighed and added into a light-proof tube, followed by adding 10 mL of saline cleaning solution. The tube was shaken well, wrapped with tin foil, and stored in the dark.

0.5% sodium fluorescein: 0.05 g of sodium fluorescein powder was weighed and added into a light-proof tube, followed by adding 10 mL of normal saline. The tube was shaken well, wrapped with tin foil, and stored in the dark.

1% sodium fluorescein: 0.1 g of sodium fluorescein powder was weighed and added into a light-proof tube, followed by adding 10 mL of normal saline. The tube was shaken well, wrapped with tin foil, and stored in the dark.

0.5% Methylene Blue: 0.05 g of methylene blue powder was weighed and added into a light-proof tube, followed by adding 10 mL of 5% sodium bicarbonate solution. The tube was shaken well, wrapped with tin foil, and stored in the dark.

1% Methylene Blue: 0.1 g of methylene blue powder was weighed and added into a light-proof tube, followed by adding 10 mL of 5% sodium bicarbonate solution. The tube was shaken well, wrapped with tin foil, and stored in the dark.

2% Methylene Blue: 0.2 g of methylene blue powder was weighed and added into a light-proof tube, followed by adding 10 mL of 5% sodium bicarbonate solution. The tube was shaken well, wrapped with tin foil, and stored in the dark.

3% Methylene Blue: 0.3 g of methylene blue powder was weighed and added into a light-proof tube, followed by adding 10 mL of 5% sodium bicarbonate solution. The tube was shaken well, wrapped with tin foil, and stored in the dark.

0.05% 5-ALA (5-aminolevulinic acid): 0.005 g of 5-ALA powder was weighed and added into a light-proof tube, followed by adding 10 mL of 5% glucose solution. The tube was shaken well, wrapped with tin foil, and stored in the dark.

1% acriflavine: 0.1 g of acriflavine powder was weighed and added into a light-proof tube, followed by adding 10 mL of normal saline. The tube was shaken well, wrapped with tin foil, and stored in the dark.

0.05% ICG (indocyanine-green): 0.005 g of ICG powder was weighed and added into a light-proof tube, followed by adding 10 mL of normal saline. The tube was shaken well, wrapped with tin foil, and stored in the dark.

0.05% crystal violet: 0.005 g of crystal violet powder was weighed and added into a light-proof tube, followed by adding 10 mL of normal saline. The tube was shaken well, wrapped with tin foil, and stored in the dark.

### Example 1. Tissue staining by double-staining with sodium fluorescein and methylene blue

### 1.1 Staining in mouse kidneys

Mouse tissues were stained as follows:
1. Mice were anesthetized by abdominal injection with 1% sodium pentobarbital at an anesthetic dose of 8 to 9 mL/g.
2. After removing the dorsal hair of the mouse, the skin was cut with scissors to expose the kidney, which was then completely excised and taken out. With the kidney surface fixed with a blade, the renal capsule on the surface of the kidney was removed using scissors and forceps.
3. After bleeding was stopped with cotton swabs, the kidney surface was applied with 0.25% sodium fluorescein for staining for 2 minutes, and washed three times with normal saline. Then, the kidney surface was applied with 1% methylene blue staining solution for staining for 2 minutes, and washed three times with normal saline before observation under a microscope at a wavelength of 470 nm.

Results in Figure 1 show the comparison of the imaging effects of staining with methylene blue alone, staining with sodium fluorescein alone, and methylene blue-sodium fluorescein double staining in mouse kidneys. Figure 1A shows the imaging results of staining with sodium fluorescein alone at a wavelength of 470 nm. Figure 1B shows the imaging results of staining with methylene blue alone at a wavelength of 470 nm. It can be seen that it was unable to be imaged with methylene blue at a wavelength of 470 nm. Figure 1C shows the imaging results of staining with methylene blue alone at a wavelength of 660 nm. Figure 1D shows the imaging results of double-staining with sodium fluorescein and methylene blue at a wavelength of 470 nm. The contours of the mouse renal tubular cells and the morphology of the cell nuclei can be clearly seen after double-staining with sodium fluorescein and methylene blue. Figure 1E shows the HE staining control.

### 1.2 Staining in mouse livers

Mouse tissues were stained as follows:
1. Mice were anesthetized by abdominal injection with 1% sodium pentobarbital at an anesthetic dose of 8 to 9 mL/g.
2. After removing the abdominal hair of the mouse, the skin was cut with scissors to expose the liver, which was then completely excised and taken out. The liver surface was fixed with a blade.
3. The liver surface was applied with 0.25% sodium fluorescein for staining for 2 minutes, and washed three times with normal saline. Then, the liver surface was applied with 1% methylene blue staining solution for staining for 2 minutes, and washed three times with normal saline before observation under a microscope at a wavelength of 470 nm.

Figure 2 shows the comparison of the imaging effects of staining with methylene blue alone, sodium fluorescein alone, and methylene blue-sodium fluorescein double staining in mouse livers. Figure 2A shows the imaging results of staining with sodium fluorescein alone at a wavelength of 470 nm. Figure 2B shows the imaging results of staining with methylene blue alone at a wavelength of 470 nm. It can be seen that it was unable to be imaged with methylene blue at a wavelength of 470 nm. Figure 2C shows the imaging results of double-staining with sodium fluorescein and methylene blue at a wavelength of 470 nm. The contours of the mouse liver cells and the morphology of the cell nuclei can be clearly seen after double-staining with sodium fluorescein and methylene blue. Figure 1E shows the HE staining control.

From Figures 1 and 2, it can be observed that the imaging effect of double staining with sodium fluorescein and methylene blue is significantly improved compared to that of staining with sodium fluorescein or methylene blue alone. Double staining with sodium fluorescein and methylene blue improves the contrast against the background and makes it possible to clearly observe tissue and cell morphology while clearly observing the cell nucleus, even the cell nucleolus. This information will help doctors determine tumor and non-tumor tissues, and is of great value to medical treatment.

### Example 2. Effects of double-staining with methylene blue and sodium fluorescein at different concentrations

Pig kidneys as tissues were stained as follows:
1. Several fresh pig kidneys were purchased and refrigerated at 4°C for later use.
2. The fresh pig kidneys were cleaned with clean water, and the renal capsule on the surface of the kidney was removed using scissors and forceps.
3. The kidney surface was applied with 0.1%, 0.25%, 0.5%, or 1% sodium fluorescein respectively for 1 minute, and washed three times with normal saline. Then, the kidney surface was applied with 0.5%, 1%, 2%, or 3% methylene blue staining solution for 1 minute, respectively, and washed three times with normal saline before observation under a microscope at a wavelength of 470 nm.

Figure 3 shows the comparison of the imaging effects of double-staining with methylene blue in combination with sodium fluorescein at different concentrations in pig kidneys. Figure 3A shows the imaging results of staining with 0.1% sodium fluorescein in combination with 0.5% methylene blue at a wavelength of 470 nm. Figure 3B shows the imaging results of staining with 0.25% sodium fluorescein in combination with 1% methylene blue at a wavelength of 470 nm. Figure 3C shows the imaging results of staining with 0.5% sodium fluorescein in combination with 2% methylene blue at a wavelength of 470 nm. Figure 3D shows the imaging results of staining with 1% sodium fluorescein in combination with 3% methylene blue at a wavelength of 470 nm.

From Figure 3, it can be observed that the combinations of sodium fluorescein and methylene blue at different concentrations with sodium fluorescein concentrations ranging from 0.1% to 1% and methylene blue concentrations ranging from 0.5% to 3% have similar staining effects and allow clear identification of the cell morphology and the cell nuclear structure.

### Example 3. Tissue staining by double-staining with 5-ALA and acridine yellow

Pig livers as tissues were stained as follows:
1. Several fresh pig livers were purchased and refrigerated at 4°C for later use.
2. The fresh pig livers were cleaned with clean water, and the renal capsule on the surface of the liver was removed using scissors and forceps.
3. The liver surface was applied on with 0.05% 5-ALA for staining for 3 minutes, and washed three times with normal saline. Then, the liver surface was applied with 1% acridine yellow staining solution for staining for 2 minutes, and washed three times with normal saline before observation under a microscope at a wavelength of 635 nm.

Figure 4 shows the imaging results of double-staining with 5-ALA and acridine yellow in pig livers. The contours of the liver cells and the morphology of the cell nuclei can be clearly seen after staining.

### Example 4. Tissue staining by double-staining with methylene blue and ICG

Pig livers as tissues were stained as follows:
1. Several fresh pig livers were purchased and refrigerated at 4°C for later use.
2. The fresh pig livers were cleaned with clean water, and the renal capsule on the surface of the liver was removed using scissors and forceps.
3. The liver surface was applied with 1% methylene blue for staining for 2 minutes, and washed three times with normal saline. Then, the liver surface was applied with 0.05% ICG staining solution for staining for 2 minutes, and washed three times with normal saline before observation under a microscope at a wavelength of 835 nm.

Figure 5 shows the imaging results of double-staining with methylene blue and ICG in pig kidneys. The contours of the liver cells and the morphology of the cell nuclei can be clearly seen after staining.

### Example 5. Tissue staining by double-staining with sodium fluorescein and crystal violet

Pig kidneys as tissues were stained as follows:
1. Several fresh pig kidneys were purchased and refrigerated at 4°C for later use.
2. The fresh pig kidneys were cleaned with clean water, and the renal capsule on the surface of the kidney was removed using scissors and forceps.
3. The kidney surface was applied with 0.25% sodium fluorescein for staining for 2 minutes, and washed three times with normal saline. Then, The kidney surface was applied with 0.05% crystal violet staining solution for staining for 3 minutes, and washed three times with normal saline before observation under a microscope at a wavelength of 525 nm.

Figure 6 shows the imaging results of double-staining with sodium fluorescein and crystal violet in pig kidneys. The contours of the liver cells and the morphology of the cell nuclei can be clearly seen after staining.

## Claims

1. A method for staining living cells for imaging, comprising: simultaneously or separately, (i) staining target cells with sodium fluorescein; (ii) staining said target cells with methylene blue; and (iii) obtaining a fluorescence image of said target cell under a fluorescence microscope, and the method allowing for observing the morphology of the cells while observing the morphology of cell nucleus; wherein the sodium fluorescein has a concentration of 0.1% to 1%, and the methylene blue has a concentration of 0.5% to 3%.

2. The method according to claim 1, wherein the sodium fluorescein has a concentration of 0.25%, and the methylene blue has a concentration of 1%.

3. The method according to claim 1, wherein the method is for staining living tissues.

4. The method according to claim 1, wherein the living cells comprise cancer cells.

5. Use of a composition for staining living cells for imaging, comprising a first fluorescent biomarker and a second fluorescent biomarker as fluorescent biomarkers to double-stain target cells and to obtain a fluorescence image of said target cell under a fluorescence microscope, wherein the first fluorescent biomarker is sodium fluorescein, the second fluorescent biomarker is methylene blue and wherein the sodium fluorescein has a concentration of 0.1% to 1% and the methylene blue has a concentration of 0.5% to 3%.

6. Use of the composition according to claim 5, wherein the sodium fluorescein has a concentration of 0.25%, and the methylene blue has a concentration of 1%.

7. Use of the composition according to claim 5, further comprising stabilizers, antioxidants, protectants, preservatives, and pH regulators.

## Patentansprüche

1. Verfahren zum Färben lebender Zellen für die Bildgebung, umfassend: gleichzeitig oder getrennt, (i) Färben von Zielzellen mit Natriumfluorescein; (ii) Färben der Zielzellen mit Methylenblau; und (iii) Erhalten eines Fluoreszenzbildes der Zielzelle unter einem Fluoreszenzmikroskop, und wobei das Verfahren die Beobachtung der Morphologie der Zellen während der Beobachtung der Morphologie des Zellkerns ermöglicht; wobei das Natriumfluorescein eine Konzentration von 0,1 % bis 1 % und das Methylenblau eine Konzentration von 0,5 % bis 3 % aufweist.

2. Verfahren nach Anspruch 1, wobei das Natriumfluorescein eine Konzentration von 0,25 % und das Methylenblau eine Konzentration von 1 % aufweist.

3. Verfahren nach Anspruch 1, wobei das Verfahren zum Färben von lebendem Gewebe dient.

4. Verfahren nach Anspruch 1, wobei die lebenden Zellen Krebszellen umfassen.

5. Verwendung einer Zusammensetzung zum Färben lebender Zellen für die Bildgebung, umfassend als fluoreszierende Biomarker einen ersten fluoreszierenden Biomarker und einen zweiten fluoreszierenden Biomarker, um Zielzellen doppelt zu färben und unter einem Fluoreszenzmikroskop ein Fluoreszenzbild der Zielzelle zu erhalten, wobei der erste fluoreszierende Biomarker Natriumfluorescein ist, der zweite fluoreszierende Biomarker Methylenblau ist und wobei das Natriumfluorescein eine Konzentration von 0,1 % bis 1 % und das Methylenblau eine Konzentration von 0,5 % bis 3 % aufweist.

6. Verwendung der Zusammensetzung nach Anspruch 5, wobei das Natriumfluorescein eine Konzentration von 0,25 % und das Methylenblau eine Konzentration von 1 % aufweist.

7. Verwendung der Zusammensetzung nach Anspruch 5, die ferner Stabilisatoren, Antioxidantien, Schutzmittel, Konservierungsmittel und pH-Regulatoren umfasst.

## Revendications

1. Procédé de coloration de cellules vivantes pour l'imagerie, comprenant : simultanément ou séparément, (i) la coloration de cellules cibles avec de la fluorescéine sodique ; (ii) la coloration desdites cellules cibles avec du bleu de méthylène ; et (iii) l'obtention d'une image de fluorescence desdites cellules cibles avec un microscope à fluorescence, et le procédé permettant l'observation de la morphologie des cellules pendant l'observation de la morphologie du noyau de cellule ; dans lequel la fluorescéine sodique présente une concentration de 0,1 % à 1 %, et le bleu de méthylène présente une concentration de 0,5 % à 3 %.

2. Procédé selon la revendication 1, dans lequel la fluorescéine sodique présente une concentration de 0,25 %, et le bleu de méthylène présente une concentration de 1 %.

3. Procédé selon la revendication 1, dans lequel le procédé est destiné à la coloration de tissus vivants.

4. Procédé selon la revendication 1, dans lequel les cellules vivantes comprennent des cellules cancéreuses.

5. Utilisation d'une composition pour la coloration de cellules vivantes en vue de l'imagerie, comprenant un premier biomarqueur fluorescent et un second biomarqueur fluorescent en tant que biomarqueurs fluorescents servant à la double coloration de cellules cibles et à l'obtention d'une image de fluorescence desdites cellules cibles avec un microscope à fluorescence, dans laquelle le premier biomarqueur fluorescent est la fluorescéine sodique, le second biomarqueur fluorescent est le bleu de méthylène, et dans laquelle la fluorescéine sodique présente une concentration de 0,1 % à 1 % et le bleu de méthylène présente une concentration de 0,5 % à 3 %.

6. Utilisation de la composition selon la revendication 5, dans laquelle la fluorescéine sodique présente une concentration de 0,25 %, et le bleu de méthylène présente une concentration de 1 %.

7. Utilisation de la composition selon la revendication 5, comprenant en outre des stabilisants, des antioxydants, des protecteurs, des conservateurs et des régulateurs de pH.
